# EUROPEAN PATENT SPECIFICATION

(11) **EP 3 936 306 B1**
(45) Date of publication and mention of the grant of the patent: **07.02.2024**
(21) Application number: 20909566.0
(22) Date of filing: 02.12.2020
(51) Int. Cl.: B29C 64/124, B29C 64/10, B29C 64/245, B29C 64/357, B29C 64/379, B33Y 10/00, B33Y 30/00, B33Y 40/20, B33Y 70/00, B29C 64/364

(54) **CONTINUOUS PRODUCTION-TYPE 3D PRINTING METHOD**
3D-DRUCKVERFAHREN FÜR KONTINUIERLICHE PRODUKTION
PROCÉDÉ D'IMPRESSION 3D DE TYPE À PRODUCTION CONTINUE

(30) Priority: 31.12.2019 KR 20190179633
(43) Date of publication of application: 12.01.2022
(73) Proprietor: 3DMaterials Co., Ltd., Gyeonggi-do 14059 (KR)
(72) Inventor: OH, Jung Hyun, Daejeon 35240 (KR); HAHM, Eun Jeong, Seoul 06713 (KR); KIM, Jin A, Daejeon 34052 (KR)
(74) Representative: Isarpatent
(86) International application number: PCT/KR2020/017450
(87) International publication number: WO 2021/137451

(56) References cited:
- WO-A1-2015/190168
- KR-A- 20150 023 286
- KR-A- 20170 045 717
- KR-A- 20170 057 002
- KR-A- 20170 115 720
- US-A1- 2017 305 139

## Description

### Technical Field

The present disclosure relates to a continuous production-type 3D printing method, and more particularly, to a continuous production-type 3D printing method includes repeatedly performing a printing process of installing a build platform on a conveyor belt made of a metallic material, such that the build platform is inclined at a predetermined angle with the top surface of the conveyor belt, applying a photocurable ink composition layer by layer onto the top surface of the build platform, and selectively curing the applied photocurable ink composition by emitting a light pattern thereto through a light emitting unit. During the printing process, a printed matter block stacked on the conveyor belt is transferred in one direction by the conveyor belt, according to the pace of the printing process, such that a printing space for a subsequent layer can be continuously secured through the transfer of the printed matter block. Thus, the 3D printing method can continuously output printed matters without a separate additional process such as a replacement operation of the build platform, and simultaneously change the shape of an output printed matter at any time through a simple operation of changing the light pattern emitted by the light emitting unit, during the printing process, thereby significantly improving the efficiency of the printing operation and the diversity of printed matters.

### Background Art

Recently, the 3D printing industry is rapidly settling down as a new industry, and actively widening its range of application in each industry. 3D printing is also referred to AM (Additive Manufacturing), and refers to a process of producing a 3D object by stacking materials using digital design data. Examples of 3D object producing technologies according to the related art may include a subtractive manufacturing method capable of manufacturing a 3D object by cutting and trimming a solid material through a machining process or the like. However, the 3D printing method includes a process of manufacturing a 3D object by stacking printing materials step by step.

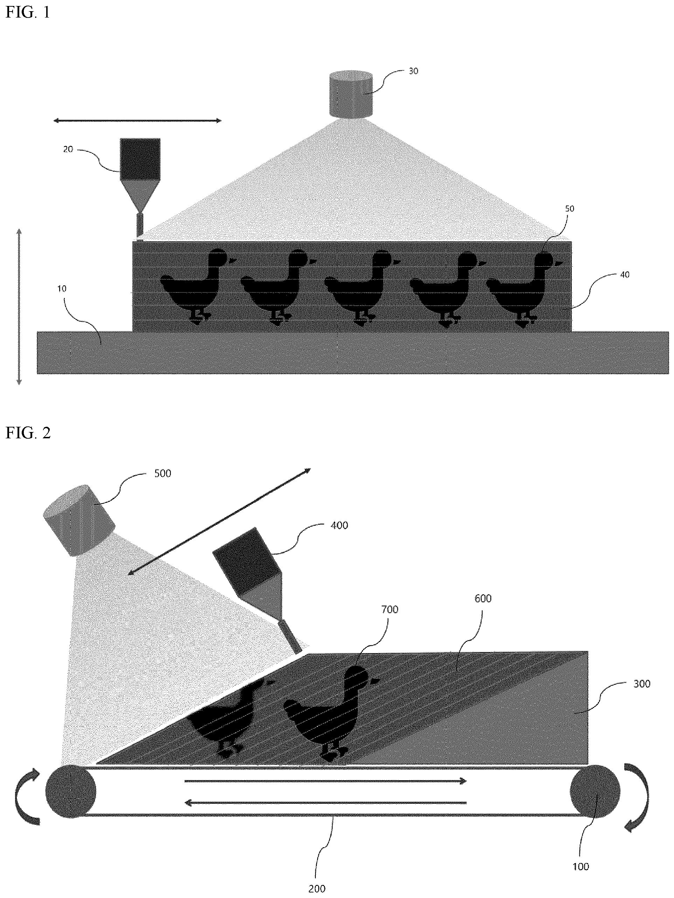

As an example of such a 3D printing method, Korean Patent Application Publication No. 10-2018-0125910 has disclosed an SLA (Stereolithography) method. As illustrated in FIG. 1, such SLA 3D printing technology according to the related art forms a printed matter layer through a process of applying a photocurable ink composition layer by layer onto a build platform 10 through a slot die coater 20 or the like, and selectively curing the applied ink composition through a light emitting unit 30 or the like, and repeatedly performs the layer printing process of applying the ink composition and curing the applied ink composition by emitting light, while vertically moving the build platform, thereby producing a 3D printed matter 50 through stacked printed matter layers 40. This printing method is referred to as a batch-type printing method.

However, the batch-type 3D printing method according to the related art arranges the printed matter on a virtual 3D block, having an area to which the printed matter is applied and a height at which the printed matter layers are stacked on the surface of the build platform, slices the printed matter into a plurality of layers, derives a light emitting pattern for each of the layers, and then repeatedly performs a process of applying the ink composition layer by layer according to the derived light emitting pattern and curing the ink composition through light emission, until the height of the layers reach a predetermined height, thereby producing a 3D printed matter. Therefore, such a batch-type 3D printing method has problems in that a printed matter cannot be changed during one batch of printing process once the batch of printing process is started, and printing can be started only after the above-described 3D virtual block is filled with sufficient printed matters to raise the efficiency of printing facilities. Furthermore, the batch-type 3D printing method inevitably requires a down time for printing facilities attributable to post processing. For example, after one batch of printing process is ended, the printed matter needs to be collected, and the build platform needs to be reorganized. Therefore, the entire producing speed of a 3D printed product may be delayed, and the batch-type 3D printing method may have many limitations in terms of the diversity of printed matters handled thereby.

The document US 2017/305139 A1 relates to a method for producing three-dimensional components from individual layers, in which thin layers of amorphous build material, such as particulate material or spreadable pastes, is applied repeatedly and then selectively solidified to form a component cross section.

### DISCLOSURE

### Technical Problem

Various embodiments are directed to a continuous production-type 3D printing method includes include repeatedly performing a printing process of installing a build platform on a conveyor belt made of a metallic material, such that the build platform is inclined at a predetermined angle with the top surface of the conveyor belt, applying a photocurable ink composition layer by layer onto the top surface of the build platform, and selectively curing the applied photocurable ink composition by emitting a light pattern thereto through a light emitting unit. During the printing process, a printed matter block stacked on the conveyor belt is transferred in one direction by the conveyor belt, according to the pace of the printing process, such that a printing space for a subsequent layer can be continuously secured through the transfer of the printed matter block. Thus, the 3D printing method can continuously output printed matters without a separate additional process such as a replacement operation of the build platform, and simultaneously change the shape of an output printed matter at any time through a simple operation of changing the light pattern emitted by the light emitting unit, during the printing process, thereby significantly improving the efficiency of the printing operation and the diversity of printed matters.

### Technical Solution

According to the invention, a 3D printing method is provided using a photocurable ink composition which exists as liquid at a predetermined phase-change temperature or higher, but hardens to a solid at a low temperature equal to or lower than the phase-change temperature. The 3D printing method includes: installing a build platform on one side of the top of a conveyor belt which is driven in one direction through a pulley, such that the build platform is inclined at a predetermined angle with the top surface of the conveyor belt; applying a photocurable ink composition layer by layer onto the top surface of the inclined build platform; selectively curing the applied photocurable ink composition layer by emitting a light pattern onto the ink composition layer through a light emitting unit; producing a 3D printed matter through printed matter layers which are repeatedly stacked in a direction indicated at the predetermined angle with the top surface of the conveyor belt, by repeated performing the steps of applying the photocurable ink composition layer by layer onto the ink composition layer onto which the light pattern has been completely emitted, and selectively curing the applied photocurable ink composition layer by emitting the light pattern onto the ink composition layer through the light emitting unit. The curing process through the application of the ink composition and the light emission is performed in a low temperature chamber which is maintained at a low temperature equal to or lower than the phase change temperature of the ink composition, the conveyor belt is driven in the one direction according to the progress speed of the printing process, and transfer a printed matter block stacked thereon in the one direction, and a printing space for a subsequent layer is continuously secured by the transfer of the printed matter block through the conveyor belt.

Preferred embodiments are set out in the dependent claims.

### Advantageous Effects

The continuous production-type 3D printing method in accordance with the present disclosure may continuously secure a printing space for a subsequent layer by transferring a printed matter block during a printing process, and remove a down time for printing facilities, required for build platform rearrangement or equipment replacement, thereby producing continuous printed matters without stopping the printing facilities. Therefore, the continuous production-type 3D printing method may raise the productivity of a 3D printed matter, and continuously output various printed matters through one production line, thereby improving the diversity of the produced printed matters.

### Brief Description of Drawings

FIG. 1 is a diagram illustrating a batch-type 3D printing method applied to a 3D printing process according to the related art.
FIG. 2 is a diagram for describing the principle of a continuous production-type 3D printing method in accordance with an embodiment of the present disclosure.
FIG. 3 is a graph illustrating a temperature-dependent change in viscosity of a photocurable ink composition used for the continuous production-type 3D printing method in accordance with the present disclosure.
FIG. 4 is a diagram for describing a process in which the continuous production-type 3D printing method in accordance with the embodiment of the present disclosure is implemented through printing facilities.

### Best Mode

Hereafter, the above-described continuous production-type 3D printing method in accordance with the present disclosure will be described in more detail through preferred embodiments.

### Mode for Invention

FIG. 2 is a diagram for describing the principle of a continuous production-type 3D printing method in accordance with an embodiment of the present disclosure.

As illustrated in FIG. 2, the 3D printing method in accordance with the embodiment of the present disclosure includes installing a build platform 300 on one side of the top surface of a conveyor belt 200 which is made of a metallic material and driven in one direction through a pulley 100, such that the build platform is inclined at a predetermined angle with the top surface of the conveyor belt 200, applying a photocurable ink composition layer by layer onto the top surface of the build platform through a slot die coater 400, and selectively curing the applied photocurable ink composition by emitting a light pattern onto the photocurable ink composition through a light emitting unit 500, thereby forming a printed matter layer along the surface of the build platform 300, such that the printed matter layer is inclined at the predetermined angle with the top surface of the conveyor belt 200.

When one printed matter layer is printed through such a process, the process of applying the photocurable ink composition layer by layer onto the printed matter layer, which is inclined at the predetermined angle with the top surface of the conveyor belt, through the slot die coater 400, and selectively curing the applied photocurable ink composition by emitting the light pattern onto the photocurable ink composition through the light emitting unit 500 is repeatedly performed to form printed matter layers 600 which are repeatedly stacked in such a direction that is diagonal at the predetermined angle with the top surface of the conveyor belt, and a 3D printed matter 700 is produced through the printed matter layers 600.

During this process, the printed matter block stacked on the conveyor belt may be transferred in one direction by the conveyor belt which is driven in the one direction according to the pace of the printing process, which makes it possible to easily and continuously secure the printing space for a subsequent layer.

At this time, the conveyor belt may be configured to be driven whenever the printing process for each layer is completed, or driven once in each printing period in which a plurality of layers with a preset thickness are printed.

As the printing space for a subsequent layer is continuously secured by transferring the printed matter block through the conveyor belt, it is possible to continuously manufacture 3D printed matters without a separate limitation, while the printing facilities are not stopped. Furthermore, it is possible to minimize the operation efficiency of the printing facilities, and to freely change the shape of the printed matter at any time during the printing process for a printed matter through a simple operation of changing the light pattern emitted by the light emitting unit, thereby significantly improving the efficiency of the printing operation and the diversity of printed matters.

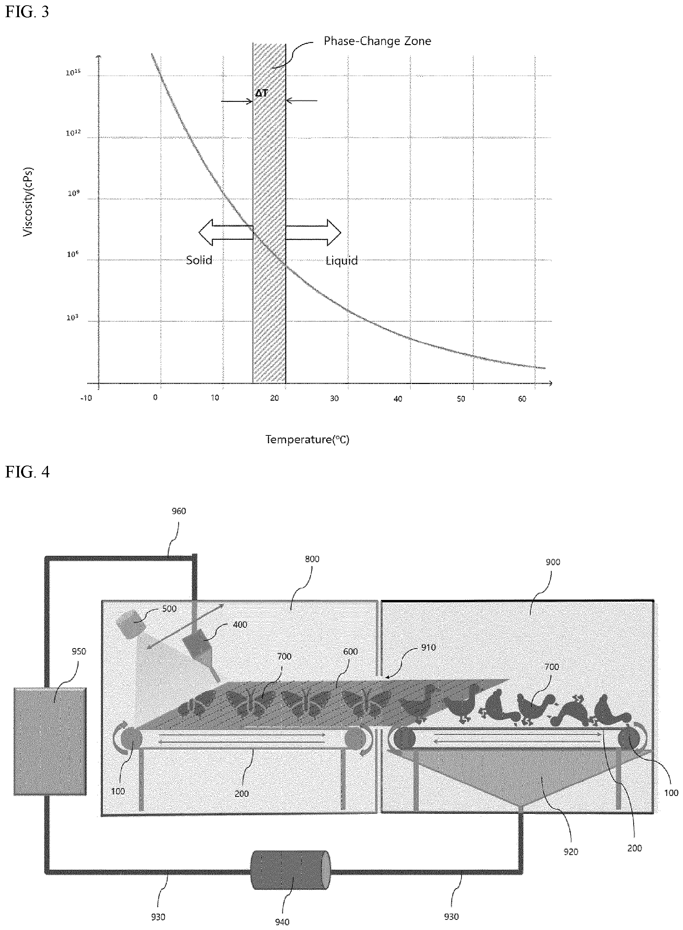

In order to effectively perform the above-described continuous producing method in accordance wit the embodiment of the present disclosure, a process of collecting the output 3D printed matter by effectively processing the printed matter block transferred through the conveyor belt without delaying the printing process is necessarily required. This process will be described below in more detail with reference to FIGS. 3 and 4.

In the embodiment of the present disclosure, a photocurable resin composition which is cured by emitting a specific wavelength of light including ultraviolet light UV is used as the ink composition for 3D printing. At this time, the ink composition used in the present disclosure has liquidus viscosity at a predetermined temperature or higher, such that one printed matter layer for 3D printing can be deposited on the surface of a printing plate such as the build platform. However, when the ink composition stays in a low temperature state below a predetermined temperature range of phase change temperature zone ΔT, the ink composition hardens to a solid while the viscosity thereof rapidly increases.

FIG. 3 is a graph illustrating a temperature-dependent change in viscosity of the photocurable ink composition used for the continuous production-type 3D printing method in accordance with the present disclosure.

As illustrated in FIG. 3, the ink composition used in the present disclosure exists as liquid having a viscosity of about 1,000,000 cPs or less at a room temperature of about 20°C. However, when the temperature falls to a temperature of about 15°C, the viscosity of the ink composition rapidly increases to 10,000,000 cPs or more. Furthermore, when the temperature falls to a temperature of 10°C or less, the viscosity of the ink composition increases to 1,000,000,000 cPs or more, such that the phase of the ink composition changes to a solid state.

The ink composition having a low-temperature phase change characteristic may be a resin composition which is composed of a monomer having a photocurable (meta)acrylic group with a molecular weight of 50 to 1,000 and an oligomer having a photocurable (meta)acrylic group with a molecular weight of 500 to 1,000,000, and can be photo-cured by a radical method, a resin composition which is composed of a monomer having a photocurable epoxy group with a molecular weight of 50 to 1,000 and an oligomer having a photocurable epoxy group with a molecular weight of 500 to 1,000,000, and can be photo-cured by a cationic method, or a hybrid composition obtained by combining the two resin compositions.

In the 3D printing method in accordance with the embodiment of the present disclosure, the process for 3D printing uses such phase-change temperature characteristics of the ink composition and is performed in a low-temperature chamber which is maintained at the environment of a low temperature ranging from 0°C to 10°C, which is equal to or lower than the phase-change temperature of the ink composition. This process will be described below in detail with reference to FIG. 4.

That is, in the present embodiment, through the above-described low-temperature printing environment, the liquid ink composition which is applied layer by layer onto the printing area by the slot die coater is rapidly cooled and changed to a solid state, such that the fluidity thereof is removed. Furthermore, the printed matter block which has hardened but is not cured supports the 3D printed matter cured through light emission, and simultaneously form the printed surface of the ink composition layer which is subsequently applied. Therefore, even after the build platform which has initially formed the printed surface gets out of the printing space with the progress of the printing process, the continuous printing process is maintained through the inclined surface of an uncured printed matter block which is successively stacked in the printing space, by the conveyor belt driven in the one direction.

FIG. 4 is a diagram for more concretely describing a process in which the continuous production-type 3D printing method in accordance with the embodiment of the present disclosure is implemented through printing facilities.

As illustrated in FIG. 4, the printing process for a printed matter in the 3D printing method in accordance with the present disclosure, which includes applying the ink composition layer by layer and curing the applied ink composition through light emission, is performed in a low temperature chamber 800 which is maintained at a low temperature equal to or lower than the phase change temperature of the ink composition. At this time, the low temperature chamber 800 may include a temperature control unit (not illustrated) such as a cooler to maintain the internal atmosphere at a predetermined temperature or lower at all times.

The 3D printing method in accordance with the embodiment of the present disclosure includes providing the conveyor belt 200 which is made of a metallic material and driven in one direction through the pulley 100, installing the build platform 300 (see FIG. 2), which is inclined at a predetermined angle with the top surface of the conveyor belt 200, on one side of the top surface of the conveyor belt 200, applying a liquid photocurable ink composition layer by layer onto the top surface of the build platform through the slot die coater 400, and selectively curing the applied photocurable ink composition by emitting a light pattern thereto through the light emitting unit 500, thereby forming a printed matter layer along the surface of the build platform 300, such that the printed matter layer is inclined at the predetermined angle with the top surface of the conveyor belt 200.

At this time, a cooling unit (not illustrated) such as a cooling loop may be connected to the above-described conveyor belt 200 or the build platform, such that the surface temperature of the conveyor belt and the build platform can be always maintained at a predetermined temperature or lower. Furthermore, the inclination angle of the build platform 300 may be properly set according to the characteristic of the ink composition and the size of the 3D printed matter as a printing target. Desirably, it is effective to set the inclination angle to an angle of 10° to 60° with respect to the top surface of the conveyor belt.

When one printed matter layer is printed through such a process, the process of applying the photocurable ink composition layer by layer onto the printed matter layer, which is inclined at the predetermined angle with the top surface of the conveyor belt, through the slot die coater 400, and selectively curing the applied photocurable ink composition by emitting the light pattern onto the photocurable ink composition through the light emitting unit 500 is repeatedly performed to form the printed matter layers 600 which are repeatedly stacked in such a direction that is diagonal at the predetermined angle with the top surface of the conveyor belt, and the 3D printed matter 700 is produced through the printed matter layers 600.

During this process, the printed matter block stacked on the conveyor belt 200 is transferred in one direction by the conveyor belt 200 which is driven in the one direction, according to the pace of the printing process, which makes it possible to easily and continuously secure a printing space for a subsequent layer.

At this time, the conveyor belt may be configured to be driven whenever the printing process for each layer is completed, or driven once in each printing period in which a plurality of layers with a preset thickness are printed.

Furthermore, a separation collection room 900 is connected to one outer wall of the low temperature chamber 800 to which the printed matter block is transferred by the conveyor belt 200, and serves to separate and collect the 3D printed matter 700 from the transferred printed matter block, and collect and reuse the ink composition, which has hardened but is not cured, by reducing the ink composition into liquid in the low temperature chamber 800. At this time, the operation environment of the separation collection room is maintained at a temperature higher than the phase-change temperature of the ink composition. Thus, the phase of the uncured ink composition constituting the transferred printed matter block changes to a liquid state again.

That is, as illustrated in FIG. 4, the conveyor belt 200 for transferring the printed matter block may be extended up to the separation collection room 900, and a separate temperature control unit (not illustrated) may be installed in the separation collection room 900 to maintain the internal atmosphere at the predetermined temperature or higher at all times. Furthermore, the extended portion of the conveyor belt formed in such a manner may also include a separate temperature control unit (not illustrated) to maintain the same temperature condition as the inside of the separation collection room 900.

At the boundary wall between the low temperature chamber 800 and the separation collection room 900, a transfer path 910 is formed to transfer the printed matter block. On the transfer path 910, a heat insulating unit (not illustrated) such as an air curtain or curtain wall may be installed to prevent heat exchange caused by a temperature difference between the two spaces.

Through such a configuration, the ink composition which is not cured and constitutes the transferred printed matter block is changed again to liquid by the operation environment of the separation collection room 900, and naturally separated from the 3D printed matter cured in the printing process. Thus, the cured 3D printed matter may be separated and collected while the continuous 3D printing process is performed without stopping the printing process to separate the 3D printed matter. During this process, the liquid ink composition may be collected into an ink collection tub 920 installed under the conveyor belt 200 extended into the separation collection room 900, and then reused.

That is, the uncured ink composition constituting the transferred printed matter block may be changed again to liquid in the separation collection room 900, and collected by the ink collection tub 920 installed under the conveyor belt 200. The ink composition collected through the ink collection tub 920 may be filtered by a filter 940 through a collection line 930, transferred to an ink storage bath 950 in which the ink composition supplied to the slot die coater 400 is stored, and then supplied to the slot die coater 400 through a supply line 960 again. Thus, the ink composition which is not cured during the printing process may not be wasted, but be effectively reused.

Then, the uncured ink composition remaining on the surface of the 3D printed matter 700 separated from the phase-changed ink composition is completely removed through a cleaning process using a cleaning solution, and the 3D printed matter 700 is then dried and completely produced.

Furthermore, when the ink composition having the phase change characteristic, described with reference to FIG. 3, is used for the entire processes of the 3D printing method in accordance with the present disclosure, the above-described operation environment of the separation collection room or the environment for the storage, collection and storage lines of the ink composition may be set to a room temperature environment, on the basis of the characteristic of the ink composition which hardens to a solid matter at a predetermined temperature or lower, but changes again to liquid at room temperature. In addition, post-processing operations such as a cleaning process for the collected 3D printed matter may be all performed at room temperature, which makes it possible to easily construct the printing and post-processing facilities based on overall processes required for the 3D printing, and to maximize the convenience and efficiency of the processing operation.

The above-described embodiment of the present disclosure only exemplifies a preferred aspect of the present disclosure, and the present disclosure is not limited thereto. Further, it is obvious that the person skilled in the art to which the present disclosure pertains can variously carry out the present disclosure without departing from the subject matter of the present disclosure claimed in the claims.

### Industrial Applicability

As described above, the continuous production-type 3D printing method in accordance with the present disclosure includes repeatedly performing the printing process of installing the build platform on the conveyor belt made of a metallic material, such that the built platform is inclined at the predetermined angle with the top surface of the conveyor belt, applying the photocurable ink composition layer by layer onto the top surface of the build platform, and selectively curing the applied photocurable ink composition by emitting a light pattern thereto through the light emitting unit. During the printing process, the printed matter block stacked on the conveyer block may be transferred in one direction by the conveyor belt, according to the pace of the printing process, such that the printing space for a subsequent layer can be continuously secured through the transfer of the printed matter block. Thus, the 3D printing method can continuously output printed matters without a separate additional process such as a replacement operation of the build platform, and simultaneously change the shape of an output printed matter at any time through a simple operation of changing the light pattern emitted by the light emitting unit, during the printing process, thereby significantly improving the efficiency of the printing operation and the diversity of printed matters.

Furthermore, when the ink composition which hardens to a solid matter at the predetermined temperature or lower but changes to liquid again at room temperature is used, the operation environment of the separation collection room for collecting the 3D printed matter, the collection and supply lines of the ink composition, and post-processing operations such as a cleaning operation of the collected 3D printed matter may be all performed at room temperature. Thus, the printing and post-processing facilities of the overall processes required for 3D printing may be easily constructed, which makes it possible to maximize the convenience and efficiency of the processing operations.

## Claims

1. A 3D printing method using a photocurable ink composition which exists as liquid at a predetermined phase-change temperature or higher, but hardens to a solid matter at a low temperature equal to or lower than the phase-change temperature, the 3D printing method comprising:
installing a build platform (300) on one side of the top of a conveyor belt (200) which is driven in one direction through a pulley, such that the build platform is inclined at a predetermined angle with the top surface of the conveyor belt (200);
applying a photocurable ink composition layer by layer onto the top surface of the inclined build platform;
selectively curing the applied photocurable ink composition layer by emitting a light pattern onto the ink composition layer through a light emitting unit (500),
producing a 3D printed matter through printed matter layers which are repeatedly stacked in a direction indicated at the predetermined angle with the top surface of the conveyor belt (200),
by repeated performing the steps of applying the photocurable ink composition layer by layer onto the ink composition layer onto which the light pattern has been completely emitted, and selectively curing the applied photocurable ink composition layer by emitting the light pattern onto the ink composition layer through the light emitting unit (500),
wherein the curing process through the application of the ink composition and the light emission is performed in a low temperature chamber (800) which is maintained at a low temperature equal to or lower than the phase change temperature of the ink composition,
the conveyor belt (200) is driven in the one direction according to the progress speed of the printing process, and transfers a printed matter block stacked thereon in the one direction, and
a printing space for a subsequent layer is continuously secured by the transfer of the printed matter block through the conveyor belt (200).

2. The 3D printing method of claim 1, wherein the build platform is formed at an angle of 10° to 60° with respect to the top surface of the conveyor belt.

3. The 3D printing method of claim 1, wherein the conveyor belt is configured to be driven whenever the printing process for each layer is completed, or driven once in each printing period in which a plurality of layers with a preset thickness are printed.

4. The 3D printing method of claim 1, wherein a separation collection room for separating and collecting the 3D printed matter from the transferred printed matter block is connected to one outer wall of the low temperature chamber to which the printed matter block is transferred by the conveyor belt, and
a transfer path for transferring the printed matter block is formed at the boundary wall between the low temperature chamber and the separation collection room, and the conveyor belt is extended into the separation collection room to transfer the printed matter block, such that the produced 3D printed matter is collected in the separation collection room.

5. The 3D printing method of claim 4, wherein the separation collection room is maintained at a temperature higher than the phase-change temperature of the ink composition.

6. The 3D printing method of claim 5, wherein the transfer path includes a heat insulating unit configured as an air curtain or curtain wall to suppress heat exchange caused by a temperature difference between the low temperature chamber and the separation collection room.

7. The 3D printing method of claim 5, wherein an ink collection tub for collecting the ink composition is installed under the conveyor belt extended to the separation collection room,
wherein the uncured ink composition, which is included in the printed matter block transferred to the separation collection room, changed again to liquid in the separation collection room, and separated from the 3D printed matter, is collected and reused.

8. The 3D printing method of claim 7, wherein the ink composition collected through the ink collection tub is filtered through a filter and then reused.

9. The 3D printing method of claim 1, wherein the low temperature chamber is maintained at a low temperature of 0°C to 10°C.

10. The 3D printing method of claim 5, wherein the separation collection room is operated in a room temperature environment.

11. The 3D printing method of claim 4, further comprising completely removing the uncured ink composition remaining on the surface of the printed matter, by using a cleaning solution, after the 3D printed matter is collected from the separation collection room.

## Patentansprüche

1. 3D-Druckverfahren unter Verwendung einer unter Licht aushärtbaren Tintenzusammensetzung, die bei einer vorgegebenen Phasenwechseltemperatur oder darüber als Flüssigkeit vorliegt, jedoch bei einer niedrigen Temperatur von kleiner gleich der Phasenwechseltemperatur zu einem Feststoff aushärtet, wobei das 3D-Druckverfahren umfasst:
Anbringen einer Bauplattform (300) auf einer Seite der Oberseite eines Förderbands (200), das über eine Riemenscheibe in einer Richtung angetrieben wird, so dass die Bauplattform unter einem vorgegebenen Winkel zur oberen Fläche des Förderbands (200) geneigt ist;
schichtweise Auftragen einer unter Licht aushärtbaren Tintenzusammensetzung auf der oberen Fläche der geneigten Bauplattform;
selektiv Aushärten der aufgetragenen Schicht aus einer unter Licht aushärtbaren Tintenzusammensetzung durch Emittieren eines Lichtmusters auf die Tintenzusammensetzungsschicht durch eine Lichtemissionseinheit (500),
Herstellen eines 3D-Druckerzeugnisses über Druckerzeugnisschichten, die wiederholt in einer Richtung übereinandergelegt werden, die mit dem vorgegebenen Winkel zur oberen Fläche des Förderbands (200) angegeben ist, durch wiederholtes Durchführen der Schritte des schichtweisen Auftragens der unter Licht aushärtbaren Tintenzusammensetzung auf die Tintenzusammensetzungsschicht, auf die das Lichtmuster vollständig emittiert wurde, und selektiv Aushärten der aufgetragenen Schicht aus einer unter Licht aushärtbaren Tintenzusammensetzung durch Emittieren des Lichtmusters auf die Tintenusammensetzungsschicht durch die Lichtemissionseinheit (500),
wobei der Aushärtungsvorgang durch das Auftragen der Tintenzusammensetzung und die Lichtemission in einer Tieftemperaturkammer (800) vorgenommen wird, die auf einer niedrigen Temperatur von kleiner gleich der Phasenwechseltemperatur der Tintenzusammensetzung gehalten wird,
das Förderband (200) je nach Fortschrittsgeschwindigkeit des Druckvorgangs in die eine Richtung angetrieben wird und einen als Stapel darauf angeordneten Druckerzeugnisblock in die eine Richtung transportiert, und
durch den Transport des Druckerzeugnisblocks durch das Förderband (200) kontinuierlich ein Druckraum für eine nachfolgende Schicht sichergestellt wird.

2. 3D-Druckverfahren nach Anspruch 1, wobei die Bauplattform unter einem Winkel von 10° bis 60° zur oberen Fläche des Förderbands ausgebildet ist.

3. 3D-Druckverfahren nach Anspruch 1, wobei das Förderband so eingerichtet ist, dass es immer dann angetrieben wird, wenn der Druckvorgang für jede Schicht abgeschlossen ist, oder nur einmal in jedem Druckzeitraum, in dem eine Vielzahl von Schichten mit einer voreingestellten Dicke gedruckt wird, angetrieben wird.

4. 3D-Druckverfahren nach Anspruch 1, wobei mit einer Außenwand der Tieftemperaturkammer, zu der der Druckerzeugnisblock mit dem Förderband transportiert wird, ein Trenn- und Auffangraum zum Trennen des 3D-Druckerzeugnisses vom transportierten Druckerzeugnisblock und Auffangen desselben verbunden ist, und
an der Grenzwand zwischen der Tieftemperaturkammer und dem Trenn- und Aufbewahrungsraum eine Transportstrecke zum Transportieren des Druckerzeugnisblocks vorgesehen ist und das Förderband in den Trenn- und Auffangraum hinein geführt ist, damit der Druckerzeugnisblock transportiert wird, so dass das hergestellte 3D-Druckerzegnis in dem Trenn- und Auffangraum aufgefangen wird.

5. 3D-Druckverfahren nach Anspruch 4, wobei der Trenn- und Auffangraum bei einer Temperatur von über der Phasenwechseltemperatur der Tintenzusammensetzung gehalten wird.

6. 3D-Druckverfahren nach Anspruch 5, wobei die Transportstrecke eine Wärmedämmeinheit aufweist, die als Luftschleier oder -vorhang ausgelegt ist und so einen Wärmeaustausch unterdrückt, der durch einen Temperaturunterschied zwischen der Tieftemperaturkammer und dem Trenn- und Auffangraum bewirkt wird.

7. 3D-Druckverfahren nach Anspruch 5, wobei unter dem Förderband, das bis zum Trenn- und Auffangraum geführt ist, eine Tintenauffangwanne zum Auffangen der Tintenzusammensetzung aufgestellt ist,
wobei die unausgehärtete Tintenzusammensetzung, die in dem Druckerzeugnisblock enthalten ist, der zum Trenn- und Auffangraum transportiert wird, in dem Trenn- und Auffangraum wieder in Flüssigkeit umgewandelt und von dem 3D-Druckerzeugnis getrennt, aufgefangen und wiederverwendet wird.

8. 3D-Druckverfahren nach Anspruch 7, wobei die Tintenzusammensetzung, die von der Tintenauffangwanne aufgefangen wird, durch einen Filter gefiltert und dann wiederverwendet wird.

9. 3D-Druckverfahren nach Anspruch 1, wobei die Tieftemperaturkammer bei einer niedrigen Temperatur von 0 °C bis 10 °C gehalten wird.

10. 3D-Druckverfahren nach Anspruch 5, wobei der Trenn- und Auffangraum in einer Zimmertemperaturumgebung betrieben wird.

11. 3D-Druckverfahren nach Anspruch 4, das ferner ein vollständiges Entfernen der nicht ausgehärteten Tintenzusammensetzung, die auf der Oberfläche des Druckerzeugnisses übrigbleibt, unter Verwendung einer Reinigungslösung umfasst, nachdem das 3D-Druckerzeugnis aus dem Trenn- und Auffangraum aufgefangen wurde.

## Revendications

1. Procédé d'impression 3D utilisant une composition d'encre photodurcissable qui existe sous forme de liquide à une température de changement de phase prédéterminée ou plus élevée, mais qui durcit en une matière solide à une basse température égale ou inférieure à la température de changement de phase, le procédé d'impression 3D comprenant de :
installer une plate-forme de construction (300) sur un côté du niveau supérieur d'une bande transporteuse (200) qui est entraînée dans une direction par une poulie, de telle sorte que la plate-forme de construction soit inclinée à un angle prédéterminé par rapport à la surface supérieure de la bande transporteuse (200) ;
appliquer une composition d'encre photodurcissable couche par couche sur la surface supérieure de la plate-forme de construction inclinée ;
durcir sélectivement la couche de composition d'encre photodurcissable appliquée en émettant un motif lumineux sur la couche de composition d'encre par une unité d'émission de lumière (500) ;
produire une matière imprimée en 3D au moyen de couches de matière imprimée qui sont empilées de manière répétée dans une direction indiquée à l'angle prédéterminé avec la surface supérieure de la bande transporteuse (200), en effectuant de manière répétée les étapes d'appliquer la composition d'encre photodurcissable couche par couche sur la couche de composition d'encre sur laquelle le motif lumineux a été complètement émis, et de durcir sélectivement la couche de composition d'encre photodurcissable appliquée en émettant le motif lumineux sur la couche de composition d'encre par l'unité d'émission de lumière (500),
dans lequel le processus de durcissement par l'application de la composition d'encre et l'émission de lumière est effectué dans une chambre à basse température (800) qui est maintenue à une basse température égale ou inférieure à la température de changement de phase de la composition d'encre,
la bande transporteuse (200) est entraînée dans ladite direction en fonction de la vitesse d'avancement du processus d'impression, et transfère un bloc de matière imprimée empilé dessus dans ladite direction, et
un espace d'impression pour une couche suivante est continuellement assuré par le transfert du bloc de matière imprimée par la bande transporteuse (200).

2. Procédé d'impression 3D selon la revendication 1, dans lequel la plate-forme de construction est formée à un angle de 10° à 60° par rapport à la surface supérieure de la bande transporteuse.

3. Procédé d'impression 3D selon la revendication 1, dans lequel la bande transporteuse est configurée pour être entraînée chaque fois que le processus d'impression de chaque couche est terminé, ou pour être entraînée une fois dans chaque période d'impression au cours de laquelle une pluralité de couches d'une épaisseur prédéfinie sont imprimées.

4. Procédé d'impression 3D selon la revendication 1, dans lequel une enceinte de séparation et collecte pour séparer et collecter la matière imprimée en 3D du bloc de matière imprimée transféré est reliée à une paroi extérieure de la chambre à basse température dans laquelle le bloc de matière imprimée est transféré par la courroie transporteuse, et un chemin de transfert pour transférer le bloc de matière imprimée est formé au niveau de la paroi de délimitation entre la chambre à basse température et l'enceinte de séparation et collecte, et la bande transporteuse est prolongée dans l'enceinte de séparation et collecte pour transférer le bloc de matière imprimée, de sorte que la matière imprimée en 3D produite est collectée dans l'enceinte de séparation et collecte.

5. Procédé d'impression 3D selon la revendication 4, dans lequel l'enceinte de séparation et collecte est maintenue à une température supérieure à la température de changement de phase de la composition d'encre.

6. Procédé d'impression 3D selon la revendication 5, dans lequel le chemin de transfert inclut une unité d'isolation thermique configurée comme un rideau d'air ou un mur-rideau pour supprimer l'échange de chaleur causé par une différence de température entre la chambre à basse température et l'enceinte de séparation et collecte.

7. Procédé d'impression 3D selon la revendication 5, dans lequel un bac de collecte d'encre pour collecter la composition d'encre est installé sous la bande transporteuse prolongée jusqu'à l'enceinte de séparation et collecte,
dans lequel la composition d'encre non durcie, qui est incluse dans le bloc de matière imprimée transféré dans l'enceinte de séparation et collecte, redevenue liquide dans l'enceinte de séparation et collecte et séparée de la matière imprimée en 3D, est collectée et réutilisée.

8. Procédé d'impression 3D selon la revendication 7, dans lequel la composition d'encre collectée par le bac de collecte d'encre est filtrée à travers un filtre et ensuite réutilisée.

9. Procédé d'impression 3D selon la revendication 1, dans lequel la chambre à basse température est maintenue à une basse température de 0 °C à 10 °C.

10. Procédé d'impression 3D selon la revendication 5, dans lequel l'enceinte de séparation et collecte est utilisée dans un environnement à température ambiante.

11. Procédé d'impression 3D selon la revendication 4, comprenant en outre d'éliminer complètement la composition d'encre non durcie restant sur la surface de la matière imprimée à l'aide d'une solution de nettoyage après que la matière imprimée en 3D a été collectée à partir de l'enceinte de séparation et collecte.
